# EUROPEAN PATENT APPLICATION

(11) **EP 4 148 526 A1**
(43) Date of publication of application: **15.03.2023**
(21) Application number: 22187222.9
(22) Date of filing: 27.07.2022
(51) Int. Cl.: G05D 1/02, G05D 1/00, B60W 60/00, G06F 11/36

(54) **SIMULATION METHOD FOR AUTONOMOUS VEHICLE AND METHOD FOR CONTROLLING AUTONOMOUS VEHICLE**

(30) Priority: 09.08.2021 CN 202110909544
(71) Applicant: Beijing Tusen Zhitu Technology Co., Ltd., Beijing 100016 (CN)
(72) Inventor: YANG, Haocheng, Beijing, 100016 (CN)
(74) Representative: Murgitroyd & Company

(57) **Abstract**

The present disclosure relates to a simulation method for an autonomous vehicle, a method for controlling the autonomous vehicle, a device, an electronic apparatus, a computer-readable storage medium, and a computer program product. The method for the simulation of the autonomous vehicle comprises acquiring the current state information of the autonomous vehicle; performing the simulation based on the current state information to acquire the prediction information of the autonomous vehicle; and sending the prediction information to the autonomous vehicle.

## Description

The present disclosure claims priority to Chinese patent application No. 202110909544.X, titled "SIMULATION METHOD FOR AUTONOMOUS VEHICLE AND METHOD FOR CONTROLLING AUTONOMOUS VEHICLE", filed on August 09, 2021.

### TECHNICAL FIELD

The present disclosure relates to the field of intelligent transportation, in particular to the simulation and control techniques for autonomous driving, and specifically to a simulation method for an autonomous vehicle, a method for controlling the autonomous vehicle, a device, an electronic apparatus, a computer-readable storage medium, and a computer program product.

### BACKGROUND

In the field of autonomous driving, the functions of modules such as positioning module, perception module, decision-making module, control module, etc. for autonomous driving can be realized through the processing capability of a vehicle. Digital twinning can be used to view the real-time urban traffic and perform regression testing on the historical traffic.

The method described in this section is not necessarily the method that has been previously conceived or adopted. Unless otherwise indicated, it should not be assumed that any method described in this section is considered prior art merely by virtue of its inclusion in this section. Similarly, the problems mentioned in this section should not be considered to have been acknowledged in any prior art unless otherwise indicated.

### SUMMARY

According to one aspect of the present disclosure, there is provided a method for the simulation of an autonomous vehicle, comprising: acquiring the current state information of the autonomous vehicle; performing simulation based on the current state information to obtain prediction information for the autonomous vehicle; and sending the prediction information to the autonomous vehicle.

According to another aspect of the present disclosure, there is provided a method for controlling an autonomous vehicle, comprising: sending current state information of the autonomous vehicle to a cloud simulation system; acquiring prediction information obtained by a cloud simulation system by performing a simulation based on the current state information; and generating control information for the autonomous vehicle based on the prediction information.

According to another aspect of the present disclosure, there is provided a simulating device for an autonomous vehicle, comprising: an acquisition unit configured to acquire the current state information of the autonomous vehicle; a simulation unit configured to perform a simulation based on the current state information to acquire prediction information for the autonomous vehicle; and a transmission unit configured to send the prediction information to the autonomous vehicle.

According to another aspect of the present disclosure, there is provided a device for controlling an autonomous vehicle, comprising: a transmission unit configured to send the current state information of the autonomous vehicle to a cloud simulation system; an acquisition unit configured to acquire prediction information obtained by the cloud simulation system performing the simulation based on the current state information; and a control unit configured to generate control information for the autonomous vehicle based on the prediction information.

According to another aspect of the present disclosure, there is provided a vehicle comprising the device for controlling an autonomous vehicle as previously described.

According to another aspect of the present disclosure, there is provided an electronic apparatus, comprising: at least one processor; and a memory communicatively connected to the at least one processor; wherein, the memory stores an instruction that, when executed by the at least one processor, causes the at least one processor to execute the method of the present disclosure.

According to another aspect of the present disclosure, there is provided a non-transitory computer-readable storage medium having a computer instruction stored thereon. The computer instruction is used to cause a computer to execute the method of the present disclosure.

According to another aspect of the present disclosure, there is provided a computer program product including a computer program. The computer program, when executed by a processor, executes the method of the present disclosure.

According to one or more embodiments of the present disclosure, by acquiring the real-time state of a vehicle, a simulation may be performed based on the real-time state of the vehicle and the vehicle may be provided with a prediction result for a super real-time simulation for a future period of time.

It is to be understood that the content in this section is neither intended to identify key or critical features of the embodiments of the present disclosure, nor to limit the scope of the disclosure. Other features of the present disclosure will become apparent from the following description.

### BRIEF DESCRIPTION OF THE DRAWINGS

The accompanying drawings illustrate the embodiments by way of example and constitute a part of the description, and together with the written description of the description serve to explain the exemplary implementation mode of the embodiments. The illustrated embodiments are for illustrative purposes only and do not limit the scope of the claims. Throughout the drawings, the same reference numerals indicate similar, but not necessarily identical, elements.
Fig. 1 shows a schematic view of an application scenario 100 according to an exemplary embodiment;
Fig. 2 shows a flow chart of a method for the simulation of an autonomous vehicle according to an embodiment of the present disclosure;
Fig. 3 shows a flow chart of a method for controlling an autonomous vehicle according to an embodiment of the present disclosure;
Fig. 4 shows an exemplary scenario diagram of an application scenario according to an embodiment of the present disclosure;
Fig. 5 shows an exemplary process of operations executed by an autonomous vehicle according to an embodiment of the present disclosure;
Fig. 6 shows an exemplary process of operations executed by a cloud simulation system deployed at a cloud server according to an embodiment of the present disclosure;
Figure 7A shows an exemplary autonomous driving process according to an embodiment of the present disclosure;
Fig. 7B shows another exemplary autonomous driving process according to an embodiment of the present disclosure;
Fig. 8 shows an exemplary block diagram of a simulated device for an autonomous vehicle according to an embodiment of the present disclosure;
Fig. 9 shows an exemplary block diagram of a device for controlling an autonomous vehicle according to an embodiment of the present disclosure; and
Fig. 10 is a structural block diagram showing an exemplary computing apparatus capable of being applied to an exemplary embodiment.

### DETAILED DESCRIPTION

The following describes exemplary embodiments of the present disclosure in conjunction with the accompanying drawings, which include various details of the embodiments of the present disclosure to facilitate understanding, and should be considered as merely exemplary. Accordingly, one of ordinary skills in the art appreciates that various changes and modifications can be made to the embodiments described herein without departing from the scope of the present disclosure. Also, descriptions of well-known functions and structures are omitted from the following description for clarity and conciseness.

In this disclosure, the use of the terms "first", "second", and the like to describe various elements is not intended to limit the positional, timing sequence, or importance relationships of the elements unless otherwise indicated, and such terms are used solely to distinguish one element from another. In some instances, a first element and a second element may refer to the same instance of the element, and in some cases, they may refer to different instances based on the context.

The term used in the description of the various illustrated examples in this disclosure is for the purpose of describing particular examples only and is not intended to be limiting. Unless the context clearly indicates otherwise, if the number of an element is not expressly defined, the element can be one or more. Further, the term "and/or" as used in this disclosure encompasses any and all possible combinations of the listed items.

In the field of autonomous driving, in order to improve the performance of an autonomous driving system, it is possible to improve the performance of modules such as positioning module, perception module, decision-making module, and control module by improving the processing capacity of a single vehicle with higher computation. However, the improvement of the computation resources of a single vehicle is always very limited, and these limited resources are all used to provide the computing of a vehicle running under the current environment. But there is no redundant computation used for real-time simulation, super real-time simulation at the same time so that it is impossible to predict that problems may occur in the autonomous driving process after a future period of time (such as several seconds).

In the field of urban transportation, the digital twinning technology can be used to view the real-time urban traffic and perform regression testing on historical traffic conditions, etc., but it cannot predict what problems will occur with environmental changes in the future period of time for a single intelligent vehicle.

To solve the above problems, embodiments of the present disclosure provide a new method for the simulation of an autonomous vehicle and a method for controlling the autonomous vehicle. The principles of the present disclosure will hereinafter be described in conjunction with the appended drawings.

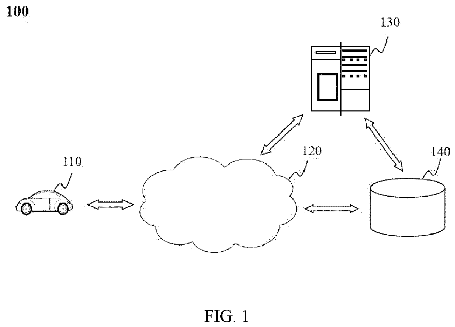

Fig. 1 shows a schematic view of an application scenario 100 according to an exemplary embodiment. As shown in Fig. 1, the application scenario 100 may include a vehicle 110 (such as the vehicle shown in Fig. 1), a network 120, a server 130, and a database 140. The vehicle 110 may be equipped with an electronic system for autonomous driving.

The vehicle 110 may be coupled to various sensors such as satellite positioning sensor (e.g., GPS, BeiDou system, etc.), speed sensor, inertial sensor (e.g., acceleration sensor and/or gyroscope), direction sensor, laser sensor, image sensor, radar, etc. By using the sensed data acquired by a sensor mounted on the vehicle, information indicating the current state of the vehicle can be acquired, such as vehicle state information, environmental information, running state information, etc.

The vehicle 110 may also include a communication unit and may send the information indicating the vehicle current state information to the server 130 via the network 120 and the server 130 executes the method for the simulation of the autonomous vehicle provided herein.

In some implementation modes, the server 130 may utilize an application program built into the server to execute the methods provided herein for the simulation of the autonomous vehicle. In some other implementation modes, the server 130 may execute the method for the simulation of the autonomous vehicle provided herein by calling an application program stored externally to the server.

The network 120 can be a single network, or a combination of at least two different networks. For example, the network 120 may include, but is not limited to, one or a combination of a local area network, a wide area network, a public network, a private network, etc.

The server 130 may be a single server, or one group of servers, each server within the group being connected via a wired or wireless network. One server group may be centralized, such as a data center, or distributed. The server 130 may be local or remote.

The database 140 may generally refer to an apparatus having the storage function. The database 140 is mainly used to store various data utilized, generated, and outputted from the operation of the vehicle 110 and the server 130. The database 140 may be local, or remote. The database 140 may include various memories such as random access memory (RAM)), read-only memory (ROM)), etc. The above-mentioned storage apparatuses are just a few examples, and the storage apparatus that the system can use is not limited thereto.

The database 140 may interconnect or communicate with the server 130 or a portion thereof via the network 120, or directly interconnect or communicate with the server 130, or a combination of the two.

In some embodiments, the database 140 may be an independent apparatus. In some other embodiments, the database 140 may also be integrated into at least one of the vehicle 110 and the server 130. For example, the database 140 may be provided on the vehicle 110 or on the server 130. As another example, the database 140 may also be distributed, with one portion provided on the vehicle 110 and another portion provided on the server 130.

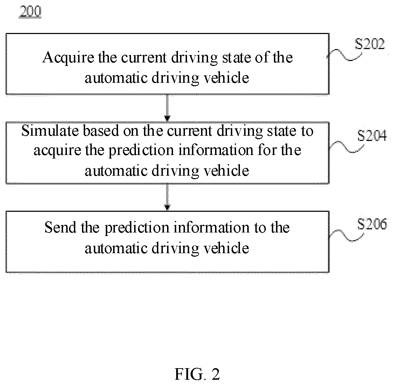

Fig. 2 shows a flow chart of a method for the simulation of an autonomous vehicle according to an embodiment of the present disclosure. The method 200 shown in Fig. 2 may be executed by using the server 130 shown in Fig. 1. The server 130 may be implemented as a cloud server. A cloud simulation system according to an embodiment of the present disclosure may be deployed on the server 130.

As shown in Fig. 2, in step S202, the current state information of the autonomous vehicle can be acquired.

In some embodiments, the current state information of the vehicle may comprise vehicle state information, environmental information, and module operating state information.

In some implementation modes, the vehicle state information may comprise vehicle pose information, vehicle speed information, vehicle control system information, etc. For example, the vehicle pose information may include, but is not limited to, vehicle head vector direction, hanging trunk included angle, and geographic location (e.g., GPS location, etc.). As another example, the vehicle speed information may include, but is not limited to, vehicle speed vector, vehicle plus speed vector, vehicle throttle/brake size, etc. As another example, the vehicle control system information may include, but is not limited to, vehicle engine rotating speed, vehicle engine gear, gearbox state, clutch state, etc.

In some implementation modes, the environmental information may comprise the lane line information around the autonomous vehicle, road information (e.g. the road is a high-speed road, a low-speed road, a curve, an uphill and downhill slope, etc.), the location of traffic signs, the type of traffic signs, the location of signal lights, the color of signal lights (e.g. traffic lights), the size, location, and speed of other vehicles around the autonomous vehicle, the location and speed of pedestrians around the autonomous vehicle, the weather, etc. The above environmental information can be obtained by acquiring sensed information through the sensor (such as radar, lidar, camera, etc.) mounted on the autonomous vehicle and fusing the acquired sensed information. It will be appreciated that a person skilled in the art can use any existing method to fuse the sensed information to obtain the environmental information around the autonomous vehicle.

In some implementation modes, the module operating state information may comprise the running state of each algorithm module of an autonomous driving system, e.g., the running state of each algorithm module of positioning module, perception module, decision-making module, control module, etc. In some examples, the module operating state information may comprise information indicating that the running result of each module is normal, information indicating that the running result of each module is abnormal, the running frame rate of each module, a warning log of each module, etc.

In some implementation modes, the server executing the method 200 may allow the connection of multiple autonomous vehicles and acquire the current state information of multiple autonomous vehicles.

In some examples, the current state information of each autonomous vehicle may be stored through a vehicle queue. Each node in the vehicle queue corresponds to one autonomous vehicle. The vehicle number and vehicle state queue can be saved in the vehicle node of each vehicle. The vehicle state queue of each vehicle may comprise a predetermined number (such as 300) of multiple vehicle state nodes.

When the autonomous vehicle connects to the server for the first time, the server for executing a simulation process can allocate a set of an independent simulation environment for the autonomous vehicle, and save the current state information when the autonomous vehicle connects for the first time in the first vehicle state node in the vehicle node for the vehicle, and inform the vehicle that the initialization is completed. The latest current state information may then be saved in the vehicle state queue each time the vehicle connects to the server. When the vehicle state queue is full, the oldest vehicle state node can be deleted when each time the latest current state information is written.

In some implementation modes, the autonomous vehicle may periodically (e.g., every second as the period) send current state information thereof to the server's simulation system.

It can be understood that a person skilled in the art can set the number of vehicle nodes in a vehicle queue according to actual situations. In some cases, the vehicle number of each vehicle node in the vehicle queue may be represented by a decimal integer. In the case where the vehicle number in the vehicle queue is represented by a 10-digit decimal integer, the server can simultaneously accommodate the information of tens of billions of vehicles.

In step S204, the simulation may be performed based on the current state information to acquire the prediction information for the autonomous vehicle. In some embodiments, the simulation may be performed based on the current state information of the vehicle and the vehicle driving state for a period of time prior to the current time. The simulation may specifically comprise real-time simulation and/or super real-time simulation.

The super real-time simulation refers to the simulation study that the time process in the simulation system is faster than the event process in a real system. That is, by using the super real-time simulation, it is possible to simulate the state of a real system in a future period from the current moment and acquire the prediction information for the future period. The definition of super real-time simulation is a simulation study that the time process of a system simulation model is faster than the time process of an actual system, i.e., the state in a future pre-determined time period is simulated. A person skilled in the art can set the duration of the pre-determined time period, such as 3s, 5s, 20s, etc. on his own initiative as required, certainly, it is not limited thereto.

In some embodiments, step S204 may comprise: in response to receiving the simulation request from the autonomous vehicle, performing a simulation in the simulation environment mapped with at least the current state information to predict the optimization parameter of the autonomous vehicle or the driving state of the autonomous vehicle in a predetermined period of time in the future.

In some implementation modes, the simulation request is received periodically from the autonomous vehicle that executes the simulation. In some examples, the simulation request may be sent to the server along with vehicle's current state information.

In some examples, after the autonomous vehicle completes the initialization, i.e., vehicle node and simulation environment are allocated for the autonomous vehicle in the server, the autonomous vehicle may send simulation request to the simulation system of the server at a predetermined request period. In the case where warning simulation can achieve the prediction for the driving state within a future predetermined time period (T), the autonomous vehicle can send the simulation request to the server with a period of T. For example, taking T equal to 20 seconds as an example, the autonomous vehicle may send a simulation request to the server every 20 seconds. In some other examples, the autonomous vehicle may send a first time simulation request at the 0^{th} second after the initialization, a second time simulation request at the T/2^{th} second after the initialization, and from the second time simulation request, the simulation request to the server with a period of T. That is, a third-time simulation request may be sent at the 1.5T^{th} second, a fourth-time simulation request may be sent at the 2.5T^{th} second, and so on. In this way, it can be guaranteed that the driving state for at least T/2 period in the future of the autonomous vehicle is validated by warning simulation.

In some other examples, additional simulation request may be sent to the server when the autonomous vehicle detects that the driving state may have an anomaly. In general terms, the simulation request comprises at least one of the following. The simulation request is periodically sent by the autonomous vehicle; a simulation request is actively sent when the autonomous vehicle is in a specific driving state. For example, the autonomous vehicle may actively send a simulation request when it determines from its current state information that the current state information is poor (e.g., a certain quantity of state being significantly abnormal) or that danger may occur.

It will be appreciated by those skilled in the art that the periodic simulation request of the autonomous vehicle can be set according to actual circumstances without departing from the principles of the present disclosure. For example, the autonomous vehicle may also be set to send the simulation request with a period of T/2, etc.

The simulation request sent by the autonomous vehicle may comprise a simulation type parameter. The simulation type parameter may indicate that the simulation to be executed is at least one of the warning simulation and the parameter optimization simulation. In the case where the simulation type parameter indicates that the simulation to be executed is a parameter optimization simulation, the simulation request may also comprise an indication of the type of optimization for which the parameter optimization simulation is intended. For example, the simulation request may include a parameter indicating that the optimization type for which the parameter optimization simulation is intended is a positioning module for the autonomous vehicle, a parameter for a perception module for the autonomous vehicle, a parameter for a planning module for the autonomous vehicle, and a parameter for a control module for the autonomous vehicle. In some examples, the simulation type parameter may also indicate that a simulation type parameter comprising both warning simulation and parameter optimization simulation is to be executed. In this case, when the prediction information of the warning simulation indicates that the predicted driving state of the autonomous vehicle is not abnormal for a future period of time, the parameter optimization simulation may be automatically executed after the execution of the warning simulation is completed.

The prediction information obtained by the predictive simulation may comprise the predicted driving state for a future predetermined period of time of the autonomous vehicle, and the prediction information obtained by the parameter optimization simulation may comprise the optimization parameter for the autonomous vehicle.

In response to the simulation request comprising a simulation type parameter indicating that the simulation is a warning simulation (i.e., when the simulation is a warning simulation), the current state information of the autonomous vehicle and/or the driving state during a time period before the current time may be simulated by using various known autonomous driving simulation techniques to obtain the predicted driving state of the vehicle during a time period after the current time.

In response to the simulation request comprising a simulation type parameter indicating that the simulation is a parameter optimization simulation (when the simulation is a parameter optimization simulation), the simulation may be executed by: running in parallel multiple simulation environments mapped with at least the current state information of the autonomous vehicle, wherein each simulation environment uses a different simulation parameter; and determining the optimization parameter based on the simulation result obtained by each simulation environment. The optimization parameter can be at least one of: a parameter for a positioning module of the autonomous vehicle, a parameter for a perception module of the autonomous vehicle, a parameter for a planning module of the autonomous vehicle, or a parameter for a control module of the autonomous vehicle. The parameter for the perception module of the autonomous vehicle may comprise the vehicle's maximum recognition distance, minimum recognition precision, and like parameters. The parameter for the planning module of the autonomous vehicle may comprise the expected vehicle following distance and speed, maximum lane departure distance, and like parameters. The parameter for the control module of the autonomous vehicle may include friction coefficient, engine moment, and like parameters.

That is, in the case where the computation of a single vehicle is insufficient, the real-time state of the vehicle can be acquired through a server and simulated to obtain the best result for the vehicle operation.

Different numbers may be used to denote different simulation types. The number 0 may indicate a decision to execute a warning simulation or a parameter optimization simulation according to a default rule. The numeral 1 may indicate that the warning simulation is executed. The number 2 may indicate that parameter optimization simulation is executed. It could be understood that the foregoing is only illustrative of the present disclosure. Those skilled in the art can express the simulation type parameter in any other possible way to indicate different simulation types without departing from the principles of the present disclosure.

In the case where the simulation parameter type indicates that the simulation is executed according to a default rule, the warning simulation may be executed based on at least one of a preset simulation period and the current state information of the autonomous vehicle.

In some implementation modes, the default rule may comprise determining whether the warning simulation needs to be executed based at least on the current state information of the autonomous vehicle.

In the case where the vehicle in the current state information indicates that the vehicle driving situation and the environmental situation are not abnormal, the warning simulation may be periodically executed at a predetermined simulation period. A person skilled in the art could set the size of the simulation period according to actual situations. The simulation period may be a preset fixed period or a variable period adjusted based on the vehicle driving state. For example, the simulation period may be shortened in the case where the result of a certain warning simulation indicates that the driving state of the vehicle may be abnormal or the current state information sent by the vehicle indicates that the vehicle may be in danger. Conversely, the simulation period can be extended without any abnormality or danger.

In the case where the current state information of the vehicle indicates that the vehicle may be in danger, an additional warning simulation may be executed immediately in addition to the periodic warning simulation. For example, when the environmental information in the current state information indicates that the road ahead of the vehicle is under construction, that foreign matter exists around the vehicle, or that the weather condition is an abnormal situation such as rain and snow, or the vehicle state information and module operating state information in the current state information indicate that the driving state of the vehicle itself is abnormal, the warning simulation may be executed to predict in advance whether the driving state of the vehicle is normal in a future period of time.

In the case where the simulation parameter type indicates a request for warning simulation or parameter optimization simulation, a corresponding type of simulation may be executed in response to the simulation request. For example, when the autonomous vehicle detects that an abnormality may occur, the autonomous vehicle may actively request the simulation system of the server to execute additional simulations beyond the periodic simulation by setting the simulation parameter type to indicate warning simulation or parameter optimization simulation. For example, when the vehicle detects that a forward curve is being repaired, a simulation request may be sent with a simulation parameter type indicating warning simulation and/or parameter optimization simulation.

Since each simulation requires certain simulation time, it may happen that a new simulation is triggered in response to the simulation request of the vehicle or based on the simulation period when the last simulation has not been executed. In this case, it may be determined whether to immediately start executing a new simulation based on the type of simulation that has not been completed and/or the newly triggered simulation. Simulations triggered in response to an active request by the vehicle have a higher priority.

For example, when a simulation that has not yet been completed is a warning simulation in response to an active request by the vehicle, a newly triggered simulation may be ignored or delayed while the last simulation is completely executed. As another example, when a simulation that has not yet been completed is a simulation triggered based on a predetermined simulation period and the newly triggered simulation is triggered in response to an active request by the vehicle, the last simulation process that has not yet been completely executed may be interrupted and the new simulation may begin immediately.

In step S206, prediction information may be sent to the autonomous vehicle, wherein the prediction information is a result obtained by simulating.

The prediction information obtained by warning simulation may comprise the predicted driving state for a future predetermined period of time of the autonomous vehicle, and the prediction information obtained by the parameter optimization simulation comprises the optimization parameter for the autonomous vehicle. The predicted driving state comprises at least one of normal, controllable abnormality, and uncontrollable abnormality.

Based on the prediction information obtained through the warning simulation, the autonomous vehicle can determine whether the driving state of the vehicle has abnormality within a predetermined period of time in the future. When it is determined based on the prediction information that the vehicle will have an uncontrollable abnormality state within a predetermined period of time in the future, the autonomous vehicle can issue a notification prompting the user to take over the vehicle and exit the autonomous driving state or stop the vehicle. When it is determined based on the prediction information that a controllable abnormality state will occur to the vehicle within a predetermined period of time in the future, the abnormality state can be recorded for subsequent optimization processing. The autonomous driving process may continue when it is determined based on the prediction information that there are no abnormalities in the vehicle for a predetermined period of time in the future.

By the prediction information obtained based on parameter optimization simulation, the autonomous vehicle can acquire the optimal parameter for the autonomous driving process by means of the computation of the server. For example, for a parameter of the perception module for the autonomous vehicle, the criteria for the optimal parameter may be determined based on criteria such as recognition accuracy rate and detection missing rate. For the parameter of the planning module for the autonomous vehicle, the criteria for the optimal parameter may be determined based on criteria such as the comfort of the vehicle and the closest distance to other vehicles. For the parameter of the control module for the autonomous vehicle, the criteria for the optimal parameter may be based on the duration, fuel consumption, vehicle smoothness, etc.

By using embodiments provided by the present disclosure, a simulation system configured at a cloud server can acquire the driving state of the autonomous vehicle and execute simulations for the vehicle to obtain the prediction information for the vehicle. In the case where the computation of a single vehicle is limited, by acquiring vehicle information in real-time via the shadow simulation system located at the cloud and performing super real-time simulation according to the driving state of the vehicle, it is possible to predict the running state of the vehicle in the autonomous driving process for a future period of time, and therefore, the autonomous driving process of the vehicle can be optimized.

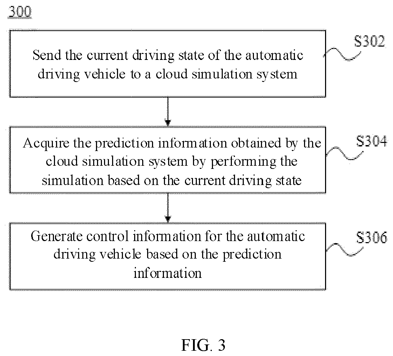

Fig. 3 shows a flow chart of a method for controlling an autonomous vehicle according to an embodiment of the present disclosure. The method 300 illustrated in Fig. 3 may be executed by using the vehicle 110 illustrated in Fig. 1.

As shown in Fig. 3, the current state information of the autonomous vehicle may be sent to the cloud simulation system in step S302. The cloud simulation system may be deployed on the server 130 shown in Fig. 1.

In some embodiments, the current state information of the vehicle may comprise vehicle state information, environmental information, and module operating state information.

In some implementation modes, the vehicle state information may comprise vehicle pose information, vehicle speed information, vehicle control system information, etc. For example, the vehicle pose information may include, but is not limited to, vehicle head vector direction, hanging trunk included angle, and geographic location (e.g., GPS location, etc.). As another example, the vehicle speed information may include, but is not limited to, vehicle speed vector, vehicle plus speed vector, vehicle throttle/brake size, etc. As another example, the vehicle control system information may include, but is not limited to, vehicle engine rotating speed, vehicle engine gear, gearbox state, clutch state, etc. The vehicle state information also includes sensor state information, which includes basic parameters running on the sensor. In addition, the sensor state information may also include sensor state marks that are self-determined by the vehicle system, such as sensor normality, sensor controllable abnormality, sensor uncontrollable abnormality, etc.

In some implementation modes, the environmental information may comprise the lane line information around the autonomous vehicle, road information (e.g. the road is a high-speed road, a low-speed road, a curve, an uphill and downhill slope, etc.), the location of traffic signs, the type of traffic signs, the location of signal lights, the color of signal lights (e.g. traffic lights), the size, location, and speed of other vehicles around the autonomous vehicle, the location and speed of pedestrians around the autonomous vehicle, the weather, etc. The above environmental information can be obtained by acquiring sensed information through the sensor (such as radar, lidar, camera, etc.) mounted on the autonomous vehicle and fusing the acquired sensed information. It will be appreciated that a person skilled in the art can use any existing method to fuse the sensed information to obtain the environmental information around the autonomous vehicle.

In some implementation modes, the module operating state information is mainly running state information at the software module level, and may include the running states of various algorithm modules of the autonomous driving system, such as the running states of the positioning module, perception module, decision-making module, and control module. In some examples, the module operating state information may include information indicating that the running result of each module is normal, information indicating that the running result of each module is abnormal, the running frame rate of each module, a warning log of each module, etc.

In step S304, the prediction information obtained by the simulation performed by the cloud simulation system based on the current state information of the vehicle can be acquired.

In some embodiments, the simulation request may be sent to the cloud simulation system periodically or based on the current state information, and the prediction information obtained by the cloud simulation system in response to the simulation request executing a super-simulation in the simulation environment mapped with at least the current state information may be received. The simulation may be a real-time simulation or a periodic simulation.

In some examples, after the autonomous vehicle completes the initialization, i.e., vehicle node and simulation environment are allocated for the autonomous vehicle in the server, the autonomous vehicle may send a simulation request to the simulation system of the server at a predetermined request period. In some other examples, an additional simulation request may be sent to the server when the autonomous vehicle detects that the driving state may have an anomaly.

The simulation request sent by the autonomous vehicle may comprise a simulation type parameter. The simulation type parameter may indicate that the simulation to be executed is one of the warning simulation and the parameter optimization simulation. In the case where the simulation type parameter indicates that the simulation to be executed is a parameter optimization simulation, the simulation request may also include an indication of the type of optimization for which the parameter optimization simulation is intended. For example, the simulation request may comprise a parameter indicating that the optimization type for which the parameter optimization simulation is intended is a positioning module for the autonomous vehicle, a parameter for a perception module for the autonomous vehicle, a parameter for a planning module for the autonomous vehicle, and a parameter for a control module for the autonomous vehicle. In some examples, the simulation type parameter may also indicate that a simulation type parameter including both warning simulation and parameter optimization simulation is to be executed. In this case, when the prediction information of the warning simulation indicates that the predicted driving state of the autonomous vehicle is not abnormal for a future period of time, the parameter optimization simulation may be automatically executed after the execution of the warning simulation is completed.

The prediction information obtained by the predictive simulation may comprise the predicted driving state for a future predetermined period of time of the autonomous vehicle, and the prediction information obtained by the parameter optimization simulation may comprise the optimization parameter for the autonomous vehicle.

When the simulation request includes a simulation type parameter indicating that the simulation is a warning simulation, the current state information of the autonomous vehicle and/or the driving state during a time period before the current time may be simulated by using various known autonomous driving simulation techniques to obtain the predicted driving state of the vehicle during a time period after the current time.

In response to the simulation request comprising a simulation type parameter indicating that the simulation is a parameter optimization simulation, the simulation may be executed by: running in parallel multiple simulation environments mapped with at least the current state information of the autonomous vehicle, wherein each simulation environment uses a different simulation parameter; and determining the optimization parameter based on the simulation result obtained by each simulation environment. The optimization parameter can be at least one of: a parameter for a positioning module of the autonomous vehicle, a parameter for a perception module of the autonomous vehicle, a parameter for a planning module of the autonomous vehicle, or a parameter for a control module of the autonomous vehicle.

Different numbers may be used to denote different simulation types. The number 0 may indicate a decision to execute a warning simulation or a parameter optimization simulation according to a default rule. The numeral 1 may indicate that the warning simulation is executed. The number 2 may indicate that parameter optimization simulation is executed. It could be understood that the foregoing is only illustrative of the present disclosure. Those skilled in the art can express the simulation type parameter in any other possible way to indicate different simulation types without departing from the principles of the present disclosure.

In step S306, the control information for the autonomous vehicle may be generated based on the prediction information.

In some embodiments, in response to determining that the prediction information comprises the predicted driving state of the autonomous vehicle for a predetermined period of time in the future: in response to the predicted driving state comprising the controllable abnormality, generating the control information indicating to record the controllable abnormality; and in response to the predicted driving state comprising the uncontrollable abnormality, generating the control information for terminating the autonomous driving state of the autonomous vehicle. In some other embodiments, in response to determining that prediction information comprises an optimization parameter for the autonomous vehicle: generating the control information for updating the current parameter of the autonomous vehicle by using the optimization parameter.

After the autonomous vehicle receives the prediction information from the cloud simulation system, it can perform different operations according to different types of prediction information.

For the results of the optimization parameter provided by the prediction information of the parameter optimization simulation, the vehicle can evaluate whether the current state is suitable for switching the parameter. If the current vehicle system resource occupancy is normal, and there is no system abnormality (such as CPU occupancy 100%, etc.), and there is no surrounding environment emergency that needs to be handled immediately, the parameter can be updated with the received optimization parameter. If the evaluation result indicates that the current state is not suitable for switching the parameter, the received optimization parameter may be stored, waiting for an appropriate opportunity for re-update.

For the predicted driving state provided by the prediction information of the warning simulation, it is possible to evaluate whether the predicted driving state has an abnormality and determine the severity level of abnormal results.

In response to the predicted driving state indicating that the driving state of the vehicle is not abnormal for a future period of time, the vehicle will run normally without any impact.

In response to the predicted driving state indicating that the vehicle's driving state has controllable abnormality for a future period of time, the vehicle may send the abnormality information to the autonomous driving monitoring module. For example, in response to the predicted driving state indicating that the sensing module will have a frame with no output, the abnormality can recover by itself and will not affect the autonomous driving process, and it can be considered as a controllable abnormality. After the monitoring module receives the information of controllable abnormality, it can generate a corresponding abnormality notification and output the same. For example, on-board passengers or remote operators may be notified of the warning information of the controllable abnormality by voice broadcasting or displaying it on a screen. In addition, the control information indicating to record the controllable abnormality may also be generated to record the controllable abnormality in a log.

In response to the predicted driving state indicating that the driving state of the vehicle has uncontrollable abnormality for a future period of time, the vehicle may generate control information for terminating the autonomous driving state of the autonomous vehicle to prompt the user to take over the vehicle or stop the vehicle. For example, when the predicted driving state indicates that the control module will output erroneous steering wheel data resulting in sudden out-of-control of the vehicle, such an abnormality state will have serious consequences and the vehicle cannot cope with it, and it can be considered as uncontrollable abnormality at such time. At this point, the autonomous driving system of the vehicle can judge that the abnormality cannot be handled and set the abnormality to a highlevel fault. The autonomous driving state of the vehicle may be terminated by notifying an operator to take over and enter an emergency shutdown mode, and the abnormality information may be reported and operators may be notified to take over and enter the emergency shutdown mode while the autonomous driving state of the vehicle is terminated.

With the above methods provided by embodiments of the present disclosure, the autonomous vehicle can acquire the prediction information for a future time from a cloud simulation system and can adjust the autonomous driving process based on the prediction information, thereby enabling the vehicle to perceive and avoid hazards in advance and reducing abnormal results caused by an out-of-control vehicle. In this process, the computing of the prediction for future information may not receive the computation constraints of a single vehicle so that the vehicle can use the computing resources of the vehicle itself to execute more urgent computing tasks according to actual situations, while using the computing resources of the cloud server to execute tasks requiring large-scale computing, thereby balancing the security and economical efficiency of the autonomous vehicle.

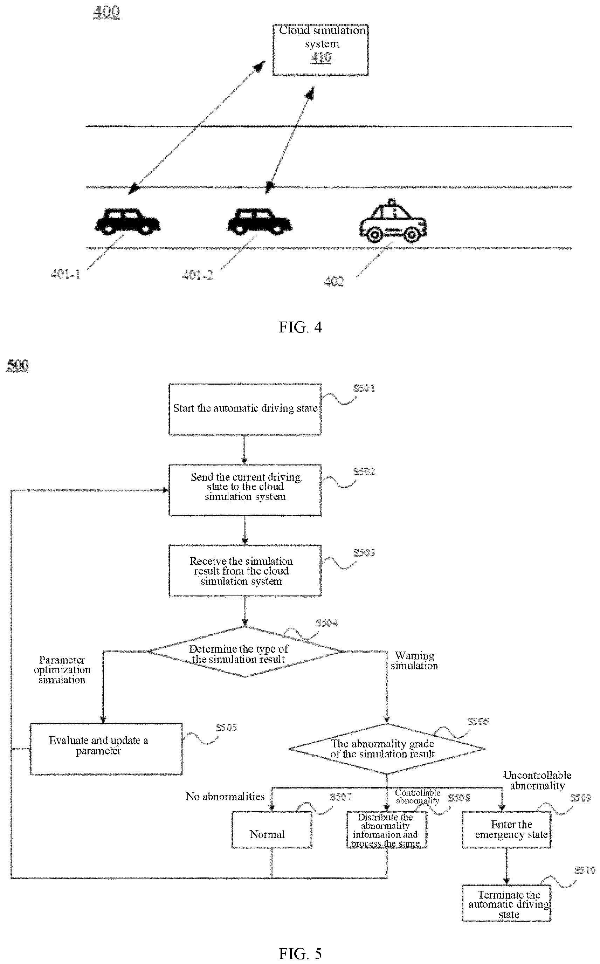

Fig. 4 shows an exemplary scenario diagram of an application scenario according to an embodiment of the present disclosure. As shown in Fig. 4, the cloud simulation system 410, autonomous vehicle 401-1, 401-2, and environmental vehicle 402 may be included in the scenario 400. The cloud simulation system 410 may receive data indicating the vehicle driving state from multiple autonomous vehicles 401-1, 401-2 via the wireless network and execute simulations based on the driving state of the respective vehicle to predict the driving state of the vehicle for a future period of time. Then the autonomous vehicles 401-1 and 401-2 may acquire respective prediction information from the cloud simulation system 410 and generate the control information for the vehicle based on the prediction information.

The cloud simulation system 410 shown in Fig. 4 may be configured to execute the method 200 described in conjunction with Fig. 2. The autonomous vehicles 401-1 and 401-2 may be configured to execute the method 300 described in connection with Fig. 3 and it will not be described in detail herein.

Fig. 5 shows an exemplary process of operations executed by an autonomous vehicle according to an embodiment of the present disclosure. The method 500 illustrated in Fig. 5 may be executed by using the vehicle 110 illustrated in Fig. 1 or the autonomous vehicles 401-1 and 401-2 illustrated in Fig. 4.

In step S501, the vehicle may start the autonomous driving state and control the vehicle based on the operation results of each module in the autonomous driving system.

In step S502, the current state information may be sent to the cloud simulation system. The current state information of the vehicle may comprise the vehicle state information, environmental information, and module operating state information.

In step S503, a simulated simulation result obtained based on the vehicle's current state information may be received from the cloud simulation system.

In step S504, the type of simulation result may be determined. As previously described, the prediction information of the simulation result obtained by warning simulation includes the predicted driving state of the autonomous vehicle in a predetermined period of time in the future, while the prediction information in the simulation result obtained by parameter optimization simulation includes an optimization parameter for the autonomous vehicle.

In response to determining that the simulation result is a result of the parameter optimization simulation, in step S505, it may be evaluated whether the current vehicle may be suitable for switching the parameter. Where it is suitable for switching the parameter, the parameter used in the corresponding module of the autonomous driving system can be updated by using the optimization parameter provided in the parameter optimization simulation result.

In response to determining that the simulation result is the result of the warning simulation, in step S506, the abnormality grade of the simulation result may be determined.

In response to determining that the abnormality grade of the simulation result is non-abnormal, in step S507, the autonomous driving system continues to operate normally and returns to step S502, continuously sending its current driving state to the cloud simulation system during the next operation process.

In response to determining that the abnormality grade of the simulation result is a controllable abnormality, in step S508, the autonomous driving system may distribute the abnormality information to the corresponding processing unit, prompt and record the abnormality information, and then return to step S502 to continue normal operation.

In response to determining that the abnormality grade of the simulation result is an uncontrollable abnormality, in step S509, the autonomous driving system will enter an emergency state and generate a control instruction that terminates the autonomous driving state, prompting the user to take over the vehicle and initiate an emergency stop. Thereafter, the autonomous driving process is terminated.

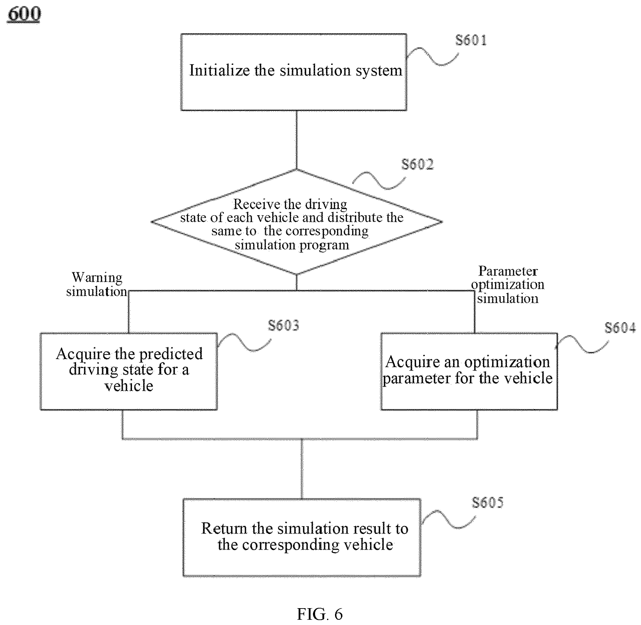

Fig. 6 shows an exemplary process of operations executed by a cloud simulation system deployed at a cloud server according to an embodiment of the present disclosure. The method 600 illustrated in Fig. 6 may be executed by using the server 130 illustrated in Fig. 1 or the cloud simulation system 410 illustrated in Fig. 4.

In step S601, the simulation system may be initialized and a corresponding simulation environment may be established for each vehicle.

In step S602, the driving state of each vehicle may be received and the simulation type of each vehicle may be determined based on the driving state of each vehicle to distribute the driving state received from the vehicle to a corresponding simulation program based on different simulation types. As previously described, at least one of warning simulation and parameter optimization simulation may be executed based on different trigger conditions.

In step S603, in response to determining that the simulation type is the warning simulation, the simulation result for the predicted driving state of the vehicle may be acquired.

In step S604, in response to determining that the simulation type is the parameter optimization simulation, the simulation result for the optimization parameter of the vehicle may be acquired.

In step S605, the simulation result obtained in step S603 and/or step S604 may be returned to the corresponding vehicle.

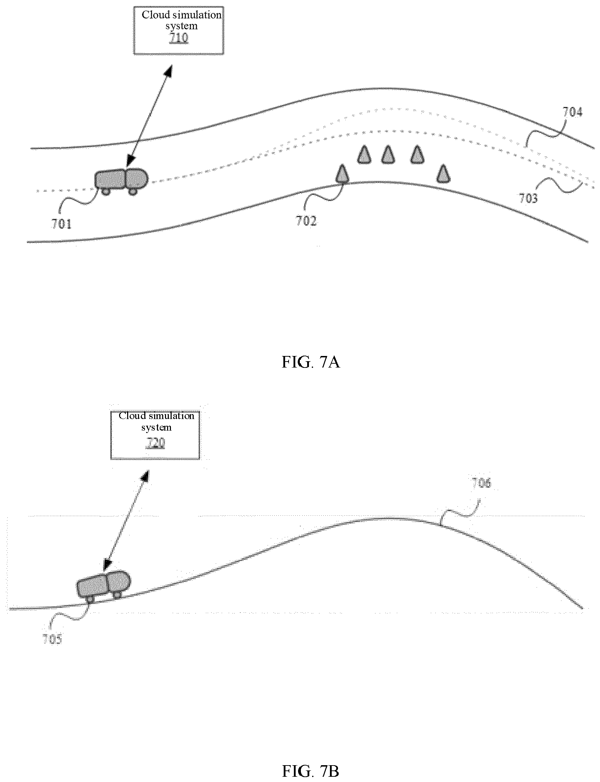

Figure 7A shows an exemplary autonomous driving process according to an embodiment of the present disclosure. The scenario shown in Fig. 7A includes the autonomous vehicle 701 and cloud simulation system 710. The cloud simulation system 710 shown in Fig. 7A may be configured to execute the method 200 described in conjunction with Fig. 2. The autonomous vehicle 701 may be configured to execute the method 300 described in connection with Fig. 3 and it will not be described in detail herein.

As shown in Fig. 7A, the autonomous vehicle 701 may be in data communication with the cloud simulation system 710. The autonomous vehicle 701 may send the driving state to the cloud simulation system 710 and receive a simulation result for the autonomous vehicle 701 from the cloud simulation system 710.

As shown in Fig. 7A, a curve appears in the front of the autonomous vehicle 701. In the absence of an obstacle on the road surface, the autonomous vehicle 701 should follow the route 703 to pass the curve. However, due to the presence of multiple obstacles 702 on the road, the autonomous vehicle must do an avoidance maneuver at the curve to pass the curve along the route 704.

As can be seen, the route 704 has a greater angle of turning relative to the route 703, thereby potentially exceeding the control capability of the autonomous vehicle, resulting in the vehicle being out of control. However, with the super real-time simulation method provided by the present disclosure, it is possible to predict in advance the out-of-control behavior of the vehicle that may occur over a future period of time, thereby enabling the vehicle to be controlled in advance before the out-of-control occurs. The specific process is as follows.

The autonomous vehicle 701 detected an obstacle road cone placed at a front curve at a distance of 1000m from the curve at a vehicle speed of 30m/s, and judged that the road was temporarily constructed and thus decelerated in advance.

When the vehicle speed of the autonomous vehicle decreased to 15m/s when it was 200m away from the curve, the vehicle information was sent to the cloud simulation system together with the information of the road cone placed at the road ahead to request the warning simulation.

The failure prevention super real-time simulation for the next 20s was performed immediately after the cloud simulation system received the simulation request.

The cloud simulation system took 2 seconds to predict the state of the vehicle after 20s, and found that the vehicle would have an abnormality that the control module would not restart at 13s, causing the vehicle to lose control and hit the guard bar outside the curve.

The cloud simulation system returned the simulation result including the abnormality information to the autonomous vehicle.

Upon receiving the simulation result, the autonomous vehicle determined that the abnormality information was outside the capabilities of the autonomous driving system which would cause a serious incident.

The autonomous driving system of the vehicle computed that the current vehicle was 10 seconds away from the incident. The abnormality information in the simulation result was then immediately broadcast via voice, text, etc. to alert the user (passenger on the vehicle or a remote operator). At the same time, the autonomous driving system also adopted a safety instruction for an emergency stop to stop the vehicle within 3s, thereby avoiding the vehicle out-of-control accident.

Fig. 7B shows another exemplary autonomous driving process according to an embodiment of the present disclosure. The scenario shown in Fig. 7B includes the autonomous vehicle 705 and cloud simulation system 720. The cloud simulation system 720 shown in Fig. 7B may be configured to execute the method 200 described in conjunction with Fig. 2. The autonomous vehicle 705 may be configured to execute the method 300 described in connection with Fig. 3 and it will not be described in detail herein.

As shown in Fig. 7B, the autonomous vehicle 705 may be in data communication with the cloud simulation system 720. The autonomous vehicle 705 may send the driving state to the cloud simulation system 720 and receive a simulation result for the autonomous vehicle 705 from the cloud simulation system 720.

In the scenario shown in Fig. 7B, the vehicle needs to pass a large uphill and downhill (route 706) in heavy snow weather. At this time, the control algorithm needs to dynamically adjust the control parameter to adapt to the current road conditions. Because of the limited computation of the autonomous vehicle 705, the control algorithm can only select a group of relatively optimized parameters in a very short time to pass the uphill and downhill slope with snow, but the parameter computed by the vehicle system is not necessarily the safest and oil-saving scheme.

However, the cloud simulation system 720 tests different parameters with several hundred simulation environments at the same time, and selects a better group of parameters in a relatively short time to make it safer and oil-saving to pass the snow road section. The specific process is as follows.

The autonomous vehicle 705 sent the current state information including its own vehicle state and environmental information to the cloud simulation system 720 at a location 200m from the uphill, requesting a parameter optimization simulation for the control module of the autonomous vehicle.

Based on the request of the vehicle 705, the cloud simulation system 720 generated 100 kinds of parameter combinations and cloned 100 environments to simulate each parameter combination.

The cloud simulation system 720 may select the best performing group of parameters to return to autonomous vehicle 705 according to a predetermined evaluation rule for the parameter of the control module.

The autonomous vehicle 702 received the optimization parameter included in the simulation result sent by the cloud simulation system 720 at a distance of 30m from the uphill and evaluated the current vehicle situation and judged that the parameter can be updated immediately.

The autonomous vehicle 702 updated the parameter for the control module by using the optimization parameter provided by the simulation result and continued to move on, thereby passing the uphill and downhill covered with snow safely and in an energy-saving manner.

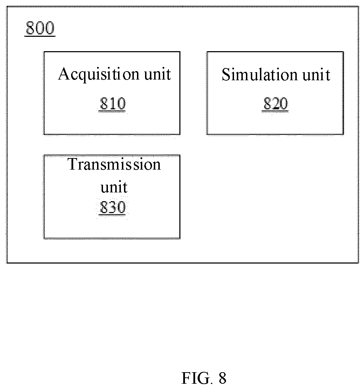

Fig. 8 shows an exemplary block diagram of a simulated device for an autonomous vehicle according to an embodiment of the present disclosure.

As shown in Fig. 8, the device 800 may include an acquisition unit 810, a simulation unit 820, and a transmission unit 830. The acquisition unit 810 may be configured to acquire the current state information of the autonomous vehicle. The simulation unit 820 may be configured to perform simulations based on current state information to acquire the prediction information for the autonomous vehicle. The transmission unit 830 may be configured to send the prediction information to the autonomous vehicle.

Here, the operations of the above-described units 810 to 830 of the device 800 for the simulation of the autonomous vehicle are similar to the operations of the previously described steps S202 to S206, respectively, and they will not be described in detail herein.

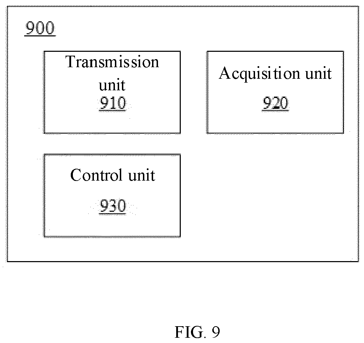

Fig. 9 shows an exemplary block diagram of a device for controlling an autonomous vehicle according to an embodiment of the present disclosure.

As shown in Fig. 9, the device 900 may include a transmission unit 910, an acquisition unit 920, and a control unit 930. The transmission unit 910 may be configured to send the current state information of the autonomous vehicle to the cloud simulation system. The acquisition unit 920 may be configured to acquire the prediction information obtained by the cloud simulation system performing the simulation based on the current state information. The control unit 930 may be configured to generate the control information for the autonomous vehicle based on the prediction information.

Here, the operations of the above-described units 910 to 930 for controlling the device 900 of the autonomous vehicle are similar to the operations of the previously described steps S302 to S306, respectively, and they will not be described herein.

There is also provided, according to an embodiment of the present disclosure, a vehicle including the aforementioned device 900 for controlling an autonomous vehicle.

According to an embodiment of the present disclosure, there is also provided an electronic apparatus comprising: at least one processor; and a memory communicatively connected to at least one processor. The memory stores an instruction that, when executed by the at least one processor, causes the at least one processor to execute the method of the present disclosure.

There is also provided, according to an embodiment of the present disclosure, a non-transitory computer-readable storage medium having a computer instruction stored thereon. The computer instruction is used to cause a computer to execute the method of the present disclosure.

There is also provided, according to an embodiment of the present disclosure, a computer program product including a computer program. The computer program, when executed by a processor, executes the method of the present disclosure.

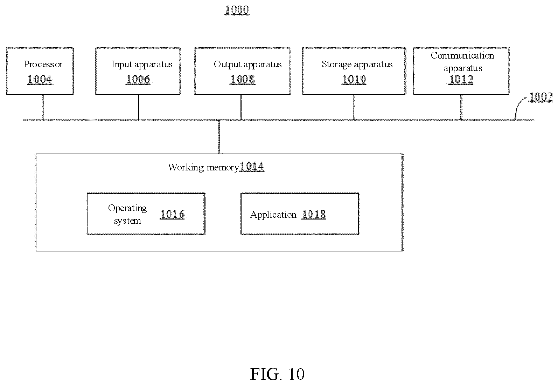

Referring to Fig. 10, a computing apparatus 1000, which is an example of a hardware apparatus that may be applied to aspects of the present disclosure, will now be described. The computing apparatus 1000 may be any machine configured to execute the processing and/or computing, and may be, but is not limited to, a workstation, a server, a desktop computer, a laptop computer, a tablet computer, a personal digital assistant, a smart phone, an on-board computer, or any combination thereof. The traffic data visualization device described above may be implemented in whole or at least in part by a computing apparatus 1000 or a similar apparatus or system.

The computing apparatus 1000 may include elements that connect to or communicate with the bus 1002 (possibly via one or more interfaces). For example, the computing apparatus 1000 may include the bus 1002, one or more processors 1004, one or more input apparatuses 1006, and one or more output apparatuses 1008. The one or more processors 1004 may be any type of processors and may include, but is not limited to, one or more general-purpose processors and/or one or more special-purpose processors (e.g., special handling chip). The input apparatus 1006 may be any type of apparatuses capable of inputting information to the computing apparatus 1000 and may include, but is not limited to, a mouse, a keyboard, a touch screen, a microphone, and/or remote control. The output apparatus 1008 may be any type of apparatuses capable of presenting information and may include, but is not limited to, a display, a speaker, a video/audio output terminal, a vibrator, and/or a printer. The computing apparatus 1000 may also include or be connected to a non-transitory storage apparatus 1010. The non-transitory storage apparatus may be any storage apparatus that is non-transitory and may enable data storage, and may include, but is not limited to, magnetic disk driver, optical storage apparatus, solid-state memory, floppy disk, flexible disk, hard disk, magnetic tape or any other magnetic medium, optical disk or any other optical medium, ROM (read-only memory), RAM (random access memory), high-speed buffer memory and/or any other memory chip or cartridge, and/or any other medium from which a computer can read data, instruction and/or code. The non-transitory storage apparatus 1010 is detachable from the interface. The non-transitory storage apparatus 1010 may have data/programs (including instructions)/codes for implementing the method and steps described above. The computing apparatus 1000 may also include a communication apparatus 1012. The communication apparatus 1012 may be any type of apparatuses or systems that enables the communication with an external apparatus and/or the network, and may include, but is not limited to, the modem, network card, infrared communication apparatus, wireless communication apparatus, and/or chipsets such as Bluetooth^{™} apparatus, 1302.11 apparatus, WiFi apparatus, WiMax apparatus, cellular communication apparatus, and/or the like.

The computing apparatus 1000 may also include working memory 1014, which may be any type of working memory that may store programs (including instructions) and/or data useful for the operation of the processor 1004, and may include, but is not limited to, random access memory and/or read-only memory apparatus.

Software elements (programs) may be located in the working memory 1014, including but not limited to an operating system 1016, one or more application programs 1018, a drive program and/or other data and code. The instruction used to execute the method and steps described above may be included in one or more application programs 1018, and the traffic data visualization device described above may be implemented by the processor 1004 by reading and executing the instruction of one or more application programs 1018. An executable code or source code of an instruction of a software element (program) may be stored in a non-transitory computer-readable storage medium (e.g., storage apparatus 1010 described above) and, upon execution, may be stored in the working memory 1014 (possibly compiled and/or mounted). An executable code or source code of the instruction of a software element (program) may also be downloaded from a remote location.

It will also be appreciated that various modifications may be made according to specific requirements. For example, custom hardware may also be used, and/or particular elements may be implemented with hardware, software, firmware, middleware, microcode, hardware description language, or any combination thereof. For example, some or all of the disclosed methods and apparatuses may be implemented by programming hardware (e.g., programmable logic circuits including the field programmable gate array (FPGA) and/or programmable logic array (PLA)) in assembly language or hardware programming language (such as VERILOG, VHDL, C++) by using the logic and algorithms according to the present disclosure.

It should also be understood that the foregoing method can be implemented by the server-client model. For example, the client may receive data input by a user and send the data to the server. The client may also receive data input by the user, perform some of the processing in the aforementioned method, and send the data resulting from the processing to the server. The server may receive data from the client and execute the aforementioned method or another portion of the aforementioned method and return the results of the execution to the client. The client may receive the results of the execution of the method from a server and may present the same to the user, for example, via an output apparatus.

It should also be understood that the assemblies of the computing apparatus 1000 may be distributed over the network. For example, some processing may be executed by using one processor while other processing may be performed by another processor remote from the one processor. Other assemblies of the computing system 1000 may be similarly distributed. As such, the computing apparatus 1000 can be interpreted as a distributed computing system that executes processing at multiple locations.

Although embodiments or examples of the present disclosure have been described with reference to the accompanying drawings, it is to be understood that the above-described methods, systems and apparatuses are merely exemplary embodiments or examples, and that the scope of the present invention is not limited by these embodiments or examples, but is defined only by the appended claims and their equivalents. Various elements of the embodiments or examples may be omitted or replaced with equivalents thereof. Further, steps may be executed in an order other than that described in this disclosure. Further, various elements of the embodiments or examples may be combined in various ways. Importantly, as technology evolves, many of the elements described herein can be replaced with equivalent elements that emerge after this disclosure.

## Claims

1. A method for simulating an autonomous vehicle, comprising:
acquiring current information associated with the autonomous vehicle;
performing simulation based on the current information to acquire prediction information of the autonomous vehicle; and
sending the prediction information to the autonomous vehicle.

2. The method of claim 1, wherein the current information comprises at least one of: vehicle state information, environmental information surrounding the autonomous vehicle, and module operating state information of the autonomous vehicle.

3. The method of claim 1 or 2, wherein performing simulation based on the current information comprises:
in response to receiving a simulation request from the autonomous vehicle, performing the simulation in a simulation environment mapped with at least the current information to predict an optimization parameter of the autonomous vehicle or a driving state of the autonomous vehicle in a predetermined period of time in the future.

4. The method of claim 3, wherein receiving the simulation request comprises at least one of:
receiving the simulation request periodically from the autonomous vehicle; or
receiving the simulation request from the autonomous vehicle when the autonomous vehicle is in a specific driving state.

5. The method of claim 3, wherein the simulation request comprises a simulation type parameter indicating that the simulation is at least one of a warning simulation or a parameter optimization simulation.

6. The method of claim 5, further comprising:
in response to the simulation being the warning simulation, the prediction information comprises a predicted driving state of the autonomous vehicle for the predetermined period of time in the future, and
in response to the simulation being the optimization simulation, the prediction information comprises the optimization parameter for the autonomous vehicle.

7. The method of claim 6, wherein the simulation request comprises a simulation type parameter indicating that the simulation is the parameter optimization simulation, and performing simulation comprises:
running multiple simulation environments in parallel mapped with at least the current information, wherein each simulation environment uses a different simulation parameter; and
determining the optimization parameter based on a simulation result obtained by each simulation environment.

8. The method of claim 7, wherein the optimization parameter comprises at least one of: a parameter for a perception module of the autonomous vehicle, a parameter for a planning module of the autonomous vehicle, or a parameter for a control module of the autonomous vehicle.

9. A method for controlling an autonomous vehicle, comprising:
sending current information associated with the autonomous vehicle to a simulation system;
acquiring prediction information obtained by the simulation system by performing simulation based on the current information; and
generating control information for the autonomous vehicle based on the prediction information.

10. The method of claim 9, wherein acquiring prediction information obtained by the simulation system by performing a simulation based on the current information comprises:
sending a simulation request to the simulation system periodically or based on the current information; and
receiving prediction information obtained by the simulation system in response to the simulation request performing simulation in a simulation environment mapped with at least the current information.

11. The method of claim 10, wherein the simulation request comprises a simulation type parameter indicating that the simulation is at least one of a warning simulation or a parameter optimization simulation, and the method further comprises:
in response to the simulation being the warning simulation, the prediction information comprises a predicted driving state of the autonomous vehicle for a future predetermined period of time, and
in response to the simulation being the parameter optimization simulation, the prediction information comprises the optimization parameter for the autonomous vehicle.

12. The method of claim 11, wherein generating control information for the autonomous vehicle based on the prediction information comprises:
in responding to the prediction information comprising the predicted driving state of the autonomous vehicle for the predetermined period of time in the future:
in response to the predicted driving state comprising a controllable abnormality, generating control information indicating to record the controllable abnormality; and
in response to the predicted driving state comprising an uncontrollable abnormality, generating the control information for terminating the autonomous driving state of the autonomous vehicle.

13. The method of claim 11, wherein generating control information for the autonomous vehicle based on the prediction information comprises:
in response to the prediction information comprising an optimization parameter for the autonomous vehicle, generating the control information for updating a current parameter of the autonomous vehicle with the optimization parameter.

14. An electronic apparatus, comprising:
at least one processor; and
at least one memory, the memory storing an instruction that, when executed by the at least one processor, causes the at least one processor to execute a method of any of claims 1-13.

15. A non-transitory computer-readable storage medium storing a computer instruction, wherein the computer instruction is used to cause the computer to execute a method of any one of claims 1-13.
